# EUROPEAN PATENT SPECIFICATION

(11) **EP 4 381 732 B1**
(45) Date of publication and mention of the grant of the patent: **01.01.2025**
(21) Application number: 23715846.4
(22) Date of filing: 29.03.2023
(51) Int. Cl.: H04N 9/31

(54) **HEAD-UP DISPLAY CALIBRATION**
KALIBRIERUNG EINER HEAD-UP-ANZEIGE
ÉTALONNAGE DE L'AFFICHAGE TÊTE HAUTE

(30) Priority: 17.05.2022 GB 202207190
(43) Date of publication of application: 12.06.2024
(73) Proprietor: Envisics Ltd, Milton Keynes MK1 1PT (GB)
(72) Inventor: HUSSAIN, Shadman, Milton Keynes, MK1 1PT (GB)
(74) Representative: Greenaway, Martin William
(86) International application number: PCT/EP2023/058146
(87) International publication number: WO 2023/222293

(56) References cited:
- CN-A- 114 258 319
- US-A1- 2017 243 406

## Description

### FIELD

The present disclosure relates to a projector and a head-up display. More specifically, the present disclosure relates to a holographic projector and a head-up display in a vehicle such as an automotive vehicle. The present disclosure also relates to a method of holographic projection, a method of projecting a virtual image in a head-up display and a method for an end-user to align or calibrate imagery of a head-up display in a vehicle.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram, "CGH", may be calculated by a technique based on a mathematical transformation such as a Fresnel or Fourier transform. These types of holograms may be referred to as Fresnel or Fourier holograms. A Fourier hologram may be considered a Fourier domain representation of the object or a frequency domain representation of the object. A CGH may also be calculated by coherent ray tracing or a point cloud technique, for example.

A CGH may be encoded on a spatial light modulator, "SLM", arranged to modulate the amplitude and/or phase of incident light. Light modulation may be achieved using electrically-addressable liquid crystals, optically-addressable liquid crystals or micro-mirrors, for example.

The SLM may comprise a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The SLM may be reflective meaning that modulated light is output from the SLM in reflection. The SLM may equally be transmissive meaning that modulated light is output from the SLM is transmission.

A holographic projector for imaging may be provided using the described technology. Such projectors have found application in head-up displays, "HUD", and head-mounted displays, "HMD", including near-eye devices, for example. Conventionally, a rectangular area (referred to herein as a virtual image area) is defined in the driver's field of view and the head-up display may display image content in this rectangular area.

Examples of calibration procedures for head-mounted displays are disclosed in US 2017/243406 A1 and CN 114 258 319 A.

### SUMMARY

Aspects of the present disclosure are defined in the appended independent claims.

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other embodiments, the image is a real image formed by holographic reconstruction and the image is projected or relayed to the viewing plane. In some embodiments, the image may be formed by illuminating a diffractive pattern (e.g., hologram) displayed on the display device.

The display device comprises pixels. The spatial light modulator may be a liquid crystal on silicon spatial light modulator.The pixels of the display may display a diffractive pattern or structure that diffracts light. The diffracted light may form an image at a plane spatially separated from the display device.

There is also disclosed herein an improved HUD for an automotive vehicle. The HUD includes a picture generating unit. The picture generating unit may be arranged to generate a picture including information content, such as speed or navigation information. There is also provided an optical system arranged to form a virtual image of the information content. The virtual image of the information content may be formed at a suitable viewing position for the driver such as within the driver's normal field of view whilst operating the automotive vehicle. For example, the virtual image of the information content may appear at a distance down the bonnet (or hood) of the vehicle from the driver. The virtual image of the information content is positioned so as not to adversely affect the driver's normal view of the scene. The virtual image of the information content may be overlaid on the driver's view of the real world. The information content is computer-generated and may be controlled or updated in real-time to provide real-time information to the driver.

Embodiments relate to a picture generating unit comprises a holographic projector by way of example only. The present disclosure is compatible with any display technology including a backlit liquid crystal display, a laser scanning display, a digital micro-mirror device "DMD", a fluorescent display and a plasma display. In embodiments relating to a holographic projector, the picture is a holographic reconstruction of a computer-generated hologram. A HUD based on the holographic projector described in full below is able to deliver a much greater contrast ratio than currently available competing technologies because of the efficiency of the holographic process and its inherent suitability for use with a laser light source. The computer-generated hologram may be arranged to, at least partially, compensate for the shape of the windscreen of the vehicle.

In a first group of examples, a holographic reconstruction of the image is formed on a screen such as a diffuser by illuminating the display device with light from a light source such as a laser diode. In these examples, the laser diode, display device and screen form a picture generating unit that will be familiar to the person skilled in the art of holographic projection. In these embodiments, the optical system may comprise an optical relay system, having at least one element with optical power, arranged to magnify the picture on the screen and project it towards a windscreen of the vehicle to form an enlarged virtual image of the picture. Such as a configuration has been disclosed in WO2020/016214.

In a second group of examples, an intermediate reconstruction of the picture is not formed on a screen and, instead, the hologram (more specifically, light encoded with the hologram or spatially modulated in accordance with the displayed hologram) is projected directly to the viewer. In these examples, it is sometimes said that the lens of the viewer's eye performs the hologram-to-image transformation - which may be a Fourier or Fresnel transformation, for example. In these embodiments, a pupil expander (or pair of orthogonal pupil expanders) may be employed to expand the eye-box. Such a configuration has been disclosed in GB2101666.2 filed 5 February 2021.

There is disclosed herein a method for an end-user to perform *in-situ* calibration of the imagery of a head-up display in a vehicle. The method comprises first to fourth ordered steps in response to receiving instruction to enter a head-up display calibration mode. The first step comprises obtaining information on the real-world scene within a field of view of the head-up display from a vehicle sensor system of the vehicle. The second step comprises using the information obtained from the vehicle sensor system to identify at least one feature in the field of view satisfying a suitability criterion for the head-up display calibration mode. The third step comprises projecting an image using the head-up display. The image comprises an image element corresponding to each feature. The fourth step comprises receiving at least one first user-input and changing the image in response to each first user-input. Optionally, the step of changing the image comprises at least one selected from the group comprising: a translating, rotating, skewing or keystoning the image. The method may be initiated by the user or the system itself. That is, the instruction may be received from the user or the system. For example, the system may be configured to periodically provide the instruction that initiates the method - e.g. once a month or once a year, or every so-many miles or kilometers.

This method eliminates the need to have alignment fixtures or specific physical targets in order to achieve a good user-based HUD calibration. Since the process includes vehicle sensors, the vehicle HUD content generation unit and the HUD, it is an end-to-end calibration which takes account of all tolerances to provide overlay of HUD content on the real-world objects.

In some respects, it may be said that the present disclosure relates to the repurposing of at least one sensor of the vehicle sensor suite or system. The term "repurposing" is used herein to reflect that the operating function of the sensor is changed from a first or primary mode to a second or secondary mode. The reader will be familiar with the various sensors that may be present in modern vehicles. Examples of such sensors are cameras, RADAR and LIDAR. The primary mode may be part of an advanced driver assistance or safety system. The secondary mode corresponds to the head-up display calibration mode. Importantly, the method of the present disclosure utilizes at least one sensor of a vehicle sensor suite that is principally incorporated for another purpose - that is, a purpose other than head-up display calibration. It may be said that the sensor is repurposed, reassigned or reallocated to perform a function or operation that is different to its main function or operation in normal usage of the vehicle.

The term "suitability criterion" is used herein in relation to assessment of an object or feature in the scene to determine if a property or parameter of the object or feature satisfies a qualitative or quantitative requirement or test. The assessment may comprise determining if a value associated with the property or parameter is above or below a threshold value. The reader will be familiar with such processes and understand how they may be used to identify objects that are suitable for further processing such as used in a calibration process. The assessment may comprise image analysis. The image that is analyzed may be an image that is obtained during the step of obtaining information about the real-world scene. For example, the step of obtaining information about the real-world scene may comprise capturing an image of the real world scene, for example using a camera or other suitable sensor. The reader will understand that if an object is deemed to be suitable for further steps of the method, the objected is said to satisfy a suitability criterion. It will be understood that other objects may be assessed and rejected before an object that satisfies the criterion is found. More specifically, it may be said that the method comprises assessing or determining whether an attribute of a feature in the scene satisfies a suitability criterion.

The suitability criterion may relate to a physical property or parameter of the at least one feature such as shape or length. Satisfying the suitability criterion comprises having a straight line or edge with a minimum length and/or having at least two straight sides, optionally, a triangular shape or polygonal shape. Alternatively or additionally, satisfying the suitability criterion may comprise having a circular or elliptical shape.

The at least one feature may comprise a plurality of features each satisfying a suitability criterion. In some embodiments, the method comprises identifying a first feature that satisfies a first suitability criterion and a second feature that satisfies a second suitability criterion different to the first suitability criterion.

An identification module may be used to perform the step of using the information obtained from the vehicle sensor system to identify at least one feature satisfying the suitability criterion. The identification module may be arranged to identify the at least one feature. The identification module may be arranged to analyze a captured image of the field of view (the image being the obtained information on the real-world scene from the preceding step of the method). The captured image may be referred to herein as a first image. Analyzing the image may comprise determining a feature in the field of view / capture image of the field of view satisfies the suitability criterion.

The term "corresponds to each feature" is used to herein to indicate a broad or general correlation between the physical form and/or position of the real-world object or feature and the imagery or image element for display by the head-up display (at least, when perceived by the user). That is, imagery is determined (e.g. selected or calculated) that has at least one characterizing feature or parameter that is substantially the same as the identified object when projected. The imagery may comprise an image element having substantially the same size and/or shape as the determined object. For example, the object may be a painted line - such as a line indicating the boundaries of a traffic lane - and the image element may be a straight line having an angle substantially equal to that of the painted line, as identified by the sensor or processing system arranged in cooperation with the sensor. The process may comprise determining a parameter of the detected object. The term "parameter of the object" may be used to refer to a measurement of an aspect of the object that at least partially defines its physical form, position and/or orientation in space. The parameter may be quantitative such as a size, direction or positional coordinate. The parameter may be a shape. By way of example only, the parameter may be a length, diameter, angle or set of coordinates in two-dimensional or three-dimensional space. For the avoidance of doubt, there is one image element per real-world feature. That is, each real-world feature has a respective or corresponding image element.

The method may further comprise identifying at least one feature outside of the field of view that satisfies a suitability criterion. In this case, the method may comprise providing an indicator or output for the end-user, optionally, wherein the output comprises an instruction to the end-user to reposition the vehicle. The instruction may be audible or visual, for example.

The method may further comprise receiving a second user-input and, in response to the second user-input, determining a calibration function. The calibration function corresponds to the total change to the image made in response to the at least one first user-input. This step may be implemented when the end-user is satisfied with the HUD imagery. The calibration function may be applied to each source image before projection during normal operation (i.e. when the HUD is not in the calibration mode).

In some embodiments, the step of projecting an image using the head-up display comprises determining an input image from the obtained information on the real-world scene, determining a hologram of the input image and illuminating the hologram to form the image. As above, the information obtained on the real-world scene may be a first image of the real-world scene or may be used to form a first image of the real-world scene. The input image from the obtained information in the real-world scene may comprise at least the at least one feature in the field of view satisfying a suitability criterion, which may be determined using an identification module, as above. So, the hologram of the input image may be a hologram of an input comprising or consisting of the at least one feature in the field of view satisfying a suitability criterion. For example, the hologram may be a hologram of an input image comprising or consisting of a straight line or edge having a minimum length and/or having at least two straight sides, optionally, the hologram may be a hologram of an input image comprising or consisting of a triangular shape or polygonal shape. Alternatively or additionally, the hologram may be of an input image comprising or consisting of a circular or elliptical shape. The step of illuminating the hologram may comprise forming a holographic reconstruction of the input image (and so may result in the formation of a holographic reconstruction of the at least one real-world feature identified to have satisfied a suitability criterion). The step of illuminating the hologram may comprise forming a virtual image of the input image at an eye-box or viewing system.

Thus, the method may effectively comprise forming a virtual image of the image element corresponding to each feature that satisfies a suitability criterion. The virtual image may be presented to the user so as to appear within the field of view of the head-up display. Thus, the method may comprise forming an augmented reality. The augmented reality may comprise the virtual image of the image element overlaid on to the real world.

As above, the fourth step of the method comprises receiving at least one first user-input and changing the image in response to each first user-input. The image referred to in the fourth step may be the holographically reconstructed virtual image of the image element. The hologram of the input image may be arranged such that, if the head-up display were properly aligned, the image elements of the projected image would appear to substantially exactly overlay the corresponding real-world features in the field of view. This may not be the case if the head-up display is improperly calibrated. The at least one first user-input of the fourth step may be an instruction to change the (projected / holographically reconstructed) image to be more closely aligned with the corresponding real-world feature. The method may further comprise determining a modified or recalculated the hologram in response to the first user-input in order to change the image as instructed by the user. The modified recalculated hologram may then be illuminated to reconstruct the (changed) image. The second user-input may be received if the changed image is deemed to be properly aligned with the corresponding real-world features. Otherwise, the step of receiving a first user-input to change the image may be repeated (and the hologram modified / recalculated and illuminated again) until the user is happy that the image is properly aligned.

The method may be a computer-implemented method. In particular, at least the step of obtaining information on the real-world scene and using the obtained information to identify at least one feature in the field of view satisfying a suitability criterion may be computer-implemented. The hologram of the input image may be computer-generated. The computer-implemented may comprise the step of determining / calculating the computer-generated hologram.

The term "hologram" is used to refer to the *recording* which contains amplitude information or phase information, or some combination thereof, about the object. The term "holographic reconstruction" is used to refer to the optical *reconstruction* of the object which is formed by illuminating the hologram. The term "replay plane" is used herein to refer to the *plane* in space where the holographic reconstruction is fully formed. The term "replay field" is used herein to refer to the sub-area of the replay plane which *can* receive spatially-modulated light from the spatial light modulator. The terms "image", "replay image" and "image region" refer to areas of the replay field illuminated by light forming the holographic reconstruction. In embodiments, the "image" may comprise discrete spots which may be referred to as "image pixels".

The terms "encoding", "writing" or "addressing" are used to describe the process of providing the plurality of pixels of the SLM with a respect plurality of control values which respectively determine the modulation level of each pixel. It may be said that the pixels of the SLM are configured to "display" a light modulation distribution in response to receiving the plurality of control values. Thus, the SLM may be said to "display" a hologram.

It has been found that a holographic reconstruction of acceptable quality can be formed from a "hologram" containing only phase information related to the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will change the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

Although reference is made to a head-up display for a vehicle, the skilled person will understand that the present disclosure extends to head-up display for other purposes and the device may more generally be referred to as a display system.

In the present disclosure, the term "substantially" when applied to a structural units of an apparatus may be interpreted as the technical feature of the structural units being produced within the technical tolerance of the method used to manufacture it.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 illustrates a block diagram of a display system in accordance with some embodiments;
Figure 3 illustrates a block diagram of an AR application in accordance with some embodiments; and
Figure 4 is a drawing of an example scene in front of a driver showing parking bays;
Figure 5A is a driver's view of first example calibration imagery displayed by the head-up display before calibration;
Figure 5B is the driver's view of the first example calibration imagery displayed by the head-up display after calibration;
Figure 6A is a driver's view of second example calibration imagery displayed by the head-up display before calibration;
Figure 6B is the driver's view of the second example calibration imagery displayed by the head-up display after calibration; and
Figure 7 shows further details of the second example calibration imagery.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

### Holographic projection - first group of examples

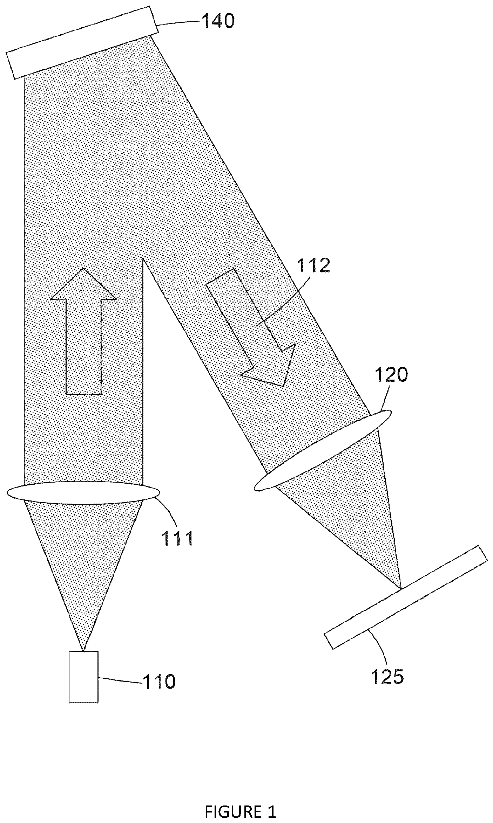

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform. In a second group of examples, the lens of the viewer's eye performs the hologram to image transform.

### Hologram calculation

In some examples, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Examples relate to Fourier holography and Gerchberg-Saxton type algorithms by way of example only. The present disclosure is equally applicable to Fresnel holography and Fresnel holograms which may be calculated by a similar method. In some examples, the hologram is a phase or phase-only hologram. However, the present disclosure is also applicable to holograms calculated by other techniques such as those based on point cloud methods. British patent application GB 2112213.0 filed 26 August 2021, discloses example hologram calculation methods that may be combined with the present disclosure.

In some examples, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### AR-HUD

Augmented Reality, "AR", systems may be utilized in a multiplicity of instances. One exemplary use for AR is to aid users while operating a vehicle. For instance, virtual content may be presented on a HUD to provide a user with directions to a desired destination. Virtual arrows or other indicators may be presented on the HUD to augment the user's physical world and provide a route the user should follow to reach their desired destination. As another example, informational text may be presented on the HUD that describes nearby stores, vehicles, etc. While it is contemplated that AR provides valuable information, presenting information on a HUD presents challenges due to the continuously changing environment. The distances between the vehicle and surrounding objects change as the vehicle and/or the surrounding objects move.

AR allows a user to augment reality with virtual content. Virtual content may be presented on a transparent display of a viewing device to augment the user's real-world environment. As an example, virtual content presented on a HUD in an automobile can present the user with arrows, shapes, 3D objects, other indicators, and or other illustrations that may provide the user with directions to a desired destination, and/or other information with respect to the environment. As another example, virtual content describing vehicles and/or businesses can be presented on the HUD to provide a user with additional information regarding their environment.

To augment the reality of a user, virtual content may be presented on the HUD to create the appearance that the virtual content is present in the user's real-world environment rather than just presented arbitrarily on a display. To properly create this appearance, a viewing device adjusts a rendering of the virtual content corresponding to a physical object.

A display system is used to augment the reality of a user. The user may be a human user (e.g., a human being), a machine user (e.g., a computer configured by a software program to interact with the viewing device), or any suitable combination thereof (e.g., a human assisted by a machine or a machine supervised by a human). The display system is a computing device integrated in a vehicle, such as an automobile, to provide virtual content on a head-up display (HUD).

The display system may comprise a transparent or semi-transparent screen which may be the windshield of a car housing the display system or an optical combiner, such as pop-up combiner, of a stand-alone head-up display. The user may simultaneously view virtual content presented by the display system as well as a physical objects in the user's field of view of the real-world physical environment.

The display system may provide the user with an augmented reality experience. For example, the display system can present virtual content that the user can view in addition to physical objects that are in the field of view of the user in the real-world physical environment. Virtual content can be any type of image, animation, etc., presented on the display. For example, virtual content can include a virtual model (e.g., 3D model) of an object or a simple indicia such as a warning triangle and similar shape.

The physical object may include any type of identifiable objects such as a 2D physical object (e.g., a picture), a 3D physical object (e.g., a vehicle, cyclist, pedestrian, building, street, etc.), a location (e.g., at the bottom floor of a factory), or any references (e.g., perceived corners of walls or furniture) in the real-world physical environment.

The display system can present virtual content in response to detecting one or more identified objects (e.g., physical object) in the physical environment. For example, the display system may include optical sensors to capture images of the real-world physical environment and computer vision recognition to identify physical objects.

In one example embodiment, the display system locally analyses captured images using a local content dataset or any other dataset previously stored by the display system. The local content dataset may include a library of virtual content associated with real-world physical objects or references. For example, the local content dataset can include image data depicting real-world physical objects. The display system can utilize the captured image of a physical object to search the local content dataset to identify the physical object and its corresponding virtual content.

In one example, the display system can analyse an image of a physical object to identify feature points of the physical object. The display system can utilize the identified feature points to identify a corresponding real-world physical object from the local content dataset. The display system may also identify tracking data related to the physical object (e.g., GPS location of the viewing device, orientation, distance to the physical object).

If the captured image is not recognized locally, the display system can download additional information (e.g., virtual content) corresponding to the captured image, from a database of a server over a network, for example.

In another example, a physical object in the image is tracked and recognized remotely at the server using a remote dataset or any other previously stored dataset of the server. The remote content dataset may include a library of virtual content or augmented information associated with real-world physical objects or references. In this type of embodiment, the display system can provide the server with the captured image of the physical object. The server can use the received image to identify the physical object and its corresponding virtual content. The server can then return the virtual content to the viewing device.

The display system can project the virtual content to augment the reality of the user. For example, the display system can present the virtual content to allow the user to simultaneously view the virtual content as well as the real-world physical environment in the field of view.

The display system can present the virtual content at a position that corresponds to the location of the physical object as perceived by a user. Accordingly, the virtual content appears to the user to be nearby or overlapping the physical object.

The display system continuously updates the presentation of the virtual content based on the location of the physical object in relation to the user by re-rendering the virtual content based on changes of the location. As a result, the user may perceive the virtual content to be fixed in a location of the user's real-world environment as the user moves.

Any of the machines, databases, or devices disclosed herein may be implemented in a general-purpose computer modified (e.g., configured or programmed) by software to be a special-purpose computer to perform one or more of the functions described herein for that machine, database, or device. As used herein, a "database" is a data storage resource and may store data structured as a text file, a table, a spreadsheet, a relational database (e.g., an object-relational database), a triple store, a hierarchical data store, or any suitable combination thereof. Moreover, any two or more of the machines, databases, or devices may be combined into a single machine, and the functions described herein for any single machine, database, or device may be subdivided among multiple machines, databases, or devices.

The network may be any network that enables communication between or among machines (e.g., server), databases, and devices (e.g., head-up displays). Accordingly, the network may be a wired network, a wireless network (e.g., a mobile or cellular network), or any suitable combination thereof. The network may include one or more portions that constitute a private network, a public network (e.g., the Internet), or any suitable combination thereof.

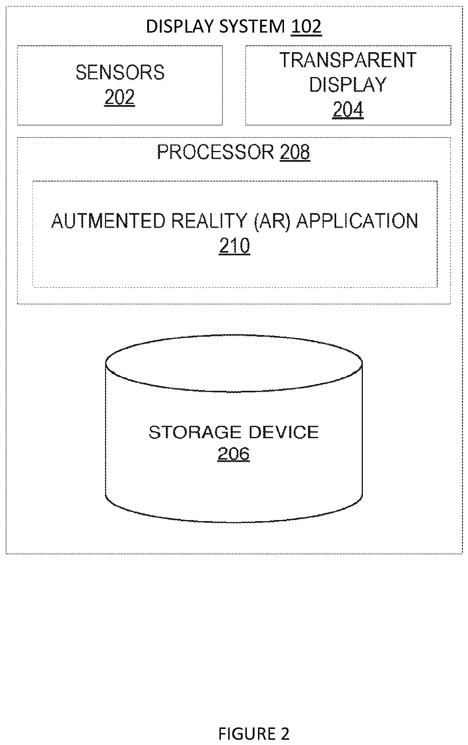

Figure 2 illustrates a block diagram in accordance with embodiments. The display system 102 includes sensors 202, a transparent display 204, a computer processor 208, and a storage device 206. The display system 102 is integrated into a vehicle, such as an automobile, motorcycle, plane, boat, recreational vehicle (RV), etc.

The sensors 202 can include any type of known sensors. The sensors 202 include at least one infrared or visible light image capture device (e.g. camera) arranged to capture images of the scene at, for example, video rate.

The transparent display 204 includes, for example, a display configured to display holograms of virtual images generated and calculated by the processor 208. The transparent display 204 can be positioned such that the user can simultaneously view virtual content presented on the transparent display and a physical object in a field of view of the user. For example, the transparent display 204 can be a HUD in an automobile or other vehicle that presents virtual content on a windshield of the vehicle while also allowing a user to view physical objects through the windshield. For example, the HUD can be configured to display virtual images itself or, alternatively, can presented virtual images projected onto the HUD.

The processor 208 includes an AR application 210 configured to present virtual content on the transparent display 204 to augment the reality of the user. The AR application 210 can receive data from sensors 202 (e.g., an image of the physical object, location data, etc.), and use the received data to identify at least one physical object (e.g. cyclist) and project virtual content (e.g. a warning shape) using the transparent display 204.

To identify the physical object (e.g. cyclist), the AR application 210 determines whether an image captured by the display system 102 matches an image locally stored by the display system 102 in the storage device 206. The storage device 206 can include a local content dataset of images and corresponding virtual content. For example, the display system 102 can receive a content data set from the server 110, and store the received content data set in the storage device 206.

The AR application 210 can compare a captured image of the physical object to the images locally stored in the storage device 206 to identify the physical object. For example, the AR application 210 can analyse the captured image of a physical object to identify feature points of the physical object. The AR application 210 can utilize the identified feature points to identify the physical object from the local content dataset. In some embodiments, the AR application 210 can identify a physical object based on characterising features of the object.

If the AR application 210 cannot identify a matching image from the local content dataset, the AR application 210 may provide the captured image of the physical object to a server. The server may use the captured image to search a remote content dataset maintained by the server.

The remote content dataset maintained by the server can be larger than the local content dataset maintained by the display system 102. For example, the local content dataset maintained by the display system 102 can include a subset of the data included in the remote content dataset, such as a core set of images or the most popular images determined by the server.

Once the physical object (e.g. cyclist) has been identified by either the display system 102 or the server, the corresponding virtual content can be retrieved and projected on the transparent display 204 to augment the reality of the user by displaying the virtual content so that the virtual content is overlain on the real-world view of the user through the transparent display. The AR application 210 can present the virtual content on the transparent display 204 to, for example, highlight the physical object (e.g. cyclist) to the user - i.e. draw the user's attention to the cyclist. For example, the AR application 210 can present a shape or other indicator that are overlain with the physical object (e.g. cyclist).

As described in the following, the AR application 210 adjusts one or more properties or parameters of the virtual content based on detection of another object between the physical object (e.g. cyclist) and the viewer. Adjusting the properties or parameters results in the virtual content being displayed with a different property (e.g. shape or colour) when an intervening object is detected. That is, the virtual content has a changed or modified appearance.

The AR application 210 may continuously updates presentation of the virtual content based on the location of the physical object (e.g. cyclist) in relation to the other vehicle and/or the user. As the other vehicle and physical object move with respect to each other, new data may be used by the AR application 210 to re-render the virtual content on the transparent display 204, at display positions that correspond to the new location data.

The AR application 210 may update presentation of the virtual content as the vehicle and/or physical object change positions. For example, the AR application 210 can gather updated sensor data from the sensors 202 as the vehicle moves and determine an updated position of the physical object in relation to the vehicle. The AR application 210 updates presentation of the virtual content based on the determined updated position of the physical object in relation to the vehicle. For example, the AR application 210 adjusts a display shape of the virtual content based on the updated position of the physical object. The AR application 210 presents the updated presentation of the virtual content on the transparent display 204, thereby providing the user with a changed depiction of the virtual content.

Any one or more of the modules described herein may be implemented using hardware (e.g., a processor of a machine) or a combination of hardware and software. For example, any module described herein may configure a processor to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

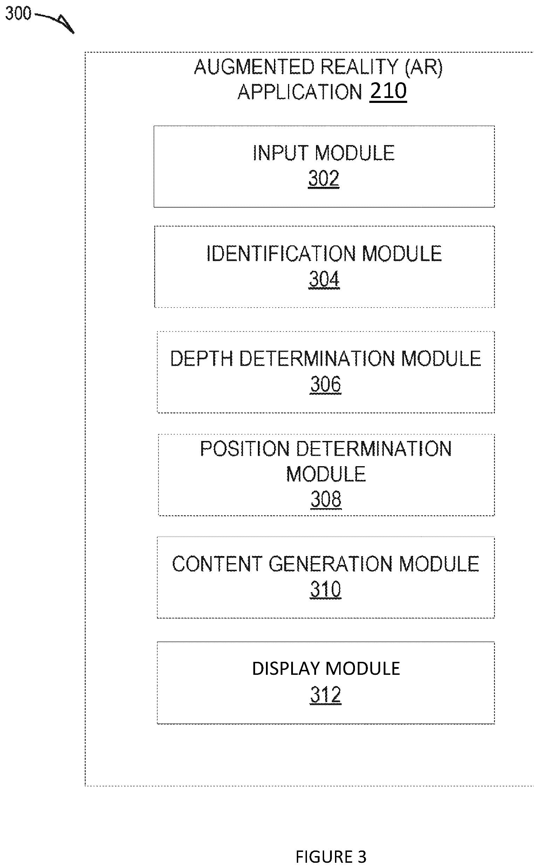

Figure 3 illustrates a block diagram of an example embodiment of an AR application 210, according to some embodiments. To avoid obscuring the inventive subject matter with unnecessary detail, various functional components (e.g., modules) that are not germane to conveying an understanding of the inventive subject matter have been omitted from Figure 3. However, a skilled artisan will readily recognize that various additional functional components may be supported by the AR application 210 to facilitate additional functionality that is not specifically described herein. Furthermore, the various functional modules depicted in Figure 3 may reside on a single computing device or may be distributed across several computing devices in various arrangements such as those used in cloud-based architectures.

As shown, the AR application 210 includes an input module 302, an identification module 304, a position determination module 306, a content generation module 310 and a display module 312.

The input module 302 receives sensor data from sensors 202, sensor data may include, for example, and without limitation optical image data of the physical object, ToF data, imaged light patterns, location/positional data, other data associated with an operation of the various sensors, and a combination thereof. The input module 302 provides the received sensor data to any of the other modules included in the AR application 210.

The identification module 304 identifies a physical object and corresponding virtual content based on an image of the physical object captured by sensors 202 of the display system. For example, the identification module 304 can determine whether the captured image matches or is similar to an image locally stored by the display system in the storage device 206.

The identification module 304 compares a captured image of the physical object to a local content dataset of images locally stored in the storage device 206 to identify the physical object. For example, the identification module 304 can analyse the captured image of a physical object to identify feature points of the physical object. The identification module 304 can utilize the identified feature points to identify the physical object from the local content dataset.

If the identification module 304 cannot identify a matching image from the local content dataset, the identification module 304 can provide the captured image of the physical object to the server and the server can search a remote content dataset maintained by the server.

Once the physical object 104 has been identified, the identification module 304 can access the corresponding virtual content to be presented on the transparent display 204 to augment the reality of the user.

Depth determination module 306 is optional. When incorporated, the depth determination module 306 determines a depth of a physical object. The depth of a physical object indicates a distance of the physical object from the vehicle. For example, the depth of a physical object indicates the distance of the physical object from the front bumper of the vehicle. As another example, the physical object depth of a physical object indicates the distance of the physical object from a user that is operating (e.g., driving) the vehicle.

The depth determination module 306 may utilize a variety of depth techniques and/or technologies to determine the depth of a physical object. In some embodiments, the sensors 202 may include sensors designed to determine the distance of a physical object 104. For example, the sensors 202 can include depth or radar sensors that emit a signal towards a physical object and receive a response signal as a result of the signal reflecting back from the physical object. The distance of the physical object can then be determined based on the period of elapsed time between the signal being emitted and the response signal being received.

In some embodiments, the depth determination module 306 may utilize captured images of a physical object to determine the depth of the physical object. Once a physical object has been identified by the identification module 304, the depth determination module 306 can determine a known size of the physical object. For instance, a known size of the physical object can be stored along with the virtual content corresponding to the physical object. The depth determination module 306 can determine a depth of the physical object based on a size of the physical object in the captured image in relation to known size of the physical object.

In some embodiments, the depth determination module 306 utilizes map data to determine the depth of a physical object. For example, the depth determination module 306 may have access to map data describing the geographic coordinates of stationary physical objects, such as buildings, bridges, etc. The depth determination module 306 can gather sensor data describing the current geographic location of the vehicle (e.g., GPS data) and determine the depth of the physical object based on the current geographic location of the vehicle in relation to the geographic coordinates of the physical object.

In some embodiments, the depth determination module 306 may determine a depth of a physical object from a combination of two or more of the above depth techniques. For example, the depth determination module 306 may determine a final distance between a vehicle and physical object, wherein determining the final distance may include the depth determination module calculating a mean, median, or mode of several initial determined distances. The determined initial distance may be calculated based on each of the depth techniques respectively. Furthermore, environmental conditions (e.g. night, day, visibility) may be detected and utilized to prioritize an importance of one of the depth techniques more than other depth techniques.

Once the depth determination module 306 has initially determined the depth of a physical object from the vehicle, the depth determination module 306 can monitor movement of the vehicle to determine an updated depth of the physical object. For example, the sensors 202 can include sensors that describe movements of the vehicle, a speed of the vehicle, etc. The depth determination module 306 can utilize this type of movement data gathered by the sensors to determine an updated position of the vehicle in relation to the physical object and, accordingly, an updated depth of the physical object

The position determination module 308, determines the position of the physical object in relation to the display system. The position determination module 308 can analyse images of the physical object to determine the position of the physical object in relation to the display system. For example, the position determination module 308 can analyse images captured by the sensors 202 and identify the physical object in the captured image. The position determination module 308 then determines the position of the physical object in relation to the display system based on the location of the physical object in the captured image.

The content generation module 310 generates virtual content based on the output of the position determination module 308. For example, the content generation module 310 changes the displayed position of the virtual content if the output of the position determination module 308 changes.

The display module 312 renders the virtual content on the transparent display 204. This can include virtual content intended to augment physical objects visible through the transparent display 204. In some embodiments, the display module 312 calculates a hologram of the output of the content generation module 310. The display module 312 can render the virtual content based on the position of a physical object corresponding to the virtual content. For example, the display module 312 can render the virtual content at a display position on the transparent display 204 that causes the virtual content to appear as overlapping and/or near the physical object to a user.

The display module 312 continuously updates rendering of virtual content on the transparent display 204. For example, the display module 312 updates the display of the virtual content as the depth and/or position of a physical object 104 changes. Accordingly, the virtual content appears to be a part of the user's real-world environment and paired with its corresponding physical object. In some embodiments, holograms are calculated in real-time.

### AR-HUD calibration

Typically, a head-up display will undergo some level of calibration after assembly onto a vehicle. This process usually involves some alignment fixtures, targets, cameras, etc. It is conventional to use a vehicle end-of-line calibration for head-up display. However, this adds production costs. The inventors have appreciated the benefits of performing HUD calibration outside of the vehicle end-of-line process.

Broadly, there is disclosed herein a user-based calibration of the HUD. The method comprises adjusting some displayed graphics using simple controls to correct for any distortions. Without any alignment fixtures or targets, it is difficult to ensure a good calibration in this manner.

Modern vehicles continue to have an increasingly capable array of sensors, such as cameras, RADAR and LIDAR. These sensors are generally used for advanced driver assistance and safety systems. Given the push towards full autonomous capability, both in regular vehicles and purpose-built autonomous ones, the sensor suite will continue to be improved significantly over the coming years.

Typically, these sensors are used to map the world, often by using sensor fusion techniques to merge data from multiple sensors to identify objects in the real world. Due to the safety-critical nature of these sensors, they usually have high resolution and are calibrated to a very high degree of accuracy. In addition, data from these sensors will likely be used in the future to generate AR-HUD content to be projected onto the real world.

There is disclosed herein a user-based calibration method that uses information from the precise sensors in the vehicle to construct HUD graphics which should overlay directly over real-world objects. This HUD graphic can then be used for user-based calibration.

In some embodiments, the vehicle sensor suite will identify objects in the real world, such as lane markings, road signs, etc. This may possibly require the vehicle to be in a specific type of area that is safe but provides a range of useable target objects, such as a parking lot. In some embodiments, if the sensors detect useable features in the real world which are outside the field of view, "FOV", of the HUD, the sensor may recommend suitable repositioning of the vehicle to bring the features within the FOV of the HUD. The HUD content generation unit prepares graphics meant to overlap with real world objects, such as highlighting road signs and lane markings. The user may utilize physical buttons or infotainment display in the vehicle to visually adjust the projected HUD content to align it with the real world objects, for example following a pre-defined sequence of calibration sequences. A diverse set of such corrections may then be used to compute a final calibration for the HUD

There is disclosed herein a method for an end-user to perform in-situ calibration of the imagery of a head-up display in a vehicle. The method is performed in response to receiving instruction (e.g. user input) to enter a head-up display calibration mode.

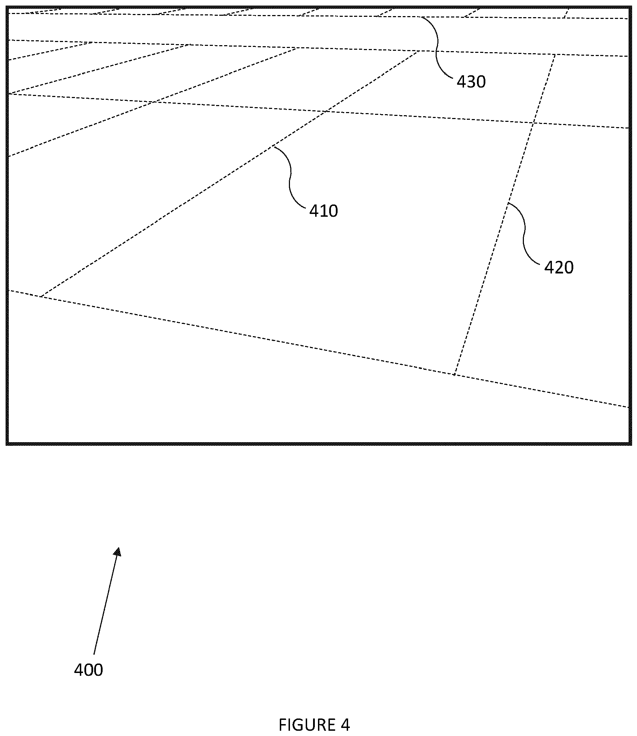

Figure 4 shows a scene 400 in front of a user within the field of view of a head-up display in a vehicle. The field of view of the head-up display is an area within which image content may be displayed by the head-up display. The field of view is therefore a sub-area of the scene 400. The scene 400 comprises an array of straight-line lane markings such as may be found in a car park. The straight-line lane markings show in scene 400 are examples of features in the scene 400. However, the present disclosure is not limited to lane markings or even straight-line features. More generally, Figure 4 shows a plurality of features including features 410, 420 and 430.

The method of the present disclosure comprises obtaining information on the real-world scene using a vehicle sensor system of the vehicle. As explained in the Summary, at least one sensor of the vehicle sensory system is reassigned to provide the necessary input for the method. It may be said that the at least one sensor is reassigned (or repurposed) to reflect that it is not being used for its primary purpose in the vehicle.

The method further comprises using the information obtained from the vehicle sensor system to identify at least one feature in the field of view satisfying a suitability criterion for the head-up display calibration mode. The person skilled in the art will appreciate that the suitability criterion may relate to any physical aspect of the at least one feature. In embodiments shown in the drawings, the at least one feature is a straight-line lane marking by way of example only.

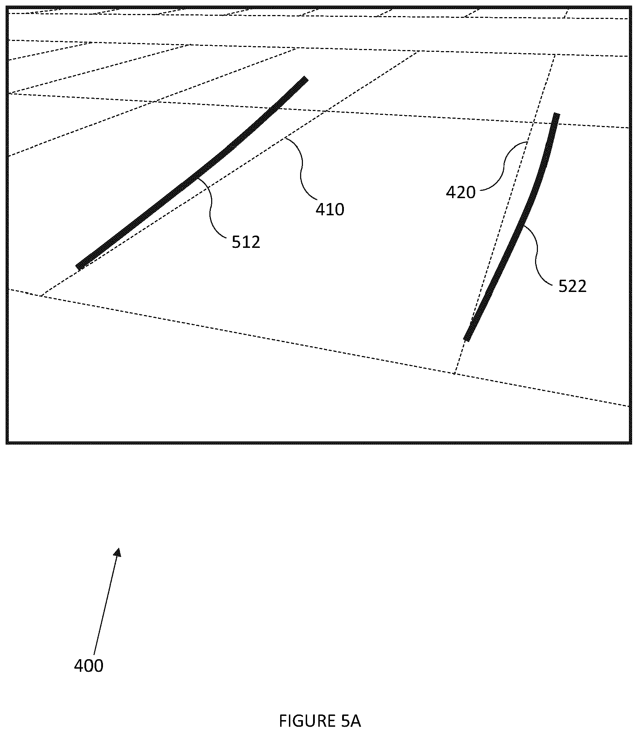

Figure 5A shows a driver view of two example image features 512 and 522 (referred to herein as image elements) projected by the head-up display before the calibration method in accordance with this disclosure. Image elements 512 and 522 should appear as straight-lines but image distortions are observed. These distortions make the lines appear to be bent when they should be straight. Image elements 512 and 522 should be straight because the input image, which the head-up display was instructed to project, comprised two straight lines corresponding to features 410 and 420, respectively, of the real-world scene 400. In some embodiments, the input image is determined from information extracted from the real-world scene 400. In accordance with this disclosure, the information is obtained by a sensor of the vehicle sensor suite. The information may comprise a representation, such as image, of the scene 400. The input image for the head-up display may be derived from the representation of the scene by image processing. In the example of Figure 5A, the input image comprises features 410 and 420 only but the observed image elements 512 and 522 are distorted by the optical system including the windscreen.

It should therefore be understood that the method comprises projecting an image using the head-up display, wherein the image comprises an image element corresponding to each feature. In summary, the vehicle sensors detect real-world objects to use for calibration and calibration features are displayed on the head-up display.

The end-user effectively provides the head-up display with feedback on the accuracy or alignment of the imagery using at least one first user-input. In response, the head-up display imagery is changed by the head-up display. This may comprise re-rendering or recalculating an input image. The method therefore comprises receiving at least one first user-input and changing the image in response to each first user-input. By way of example only, the user may utilise physical buttons or the infotainment display in the vehicle to visually adjust the projected imagery. As described in the following, the user may provide user input to align the imagery with the corresponding real world object/feature, for example following a pre-defined sequence of calibration sequences.

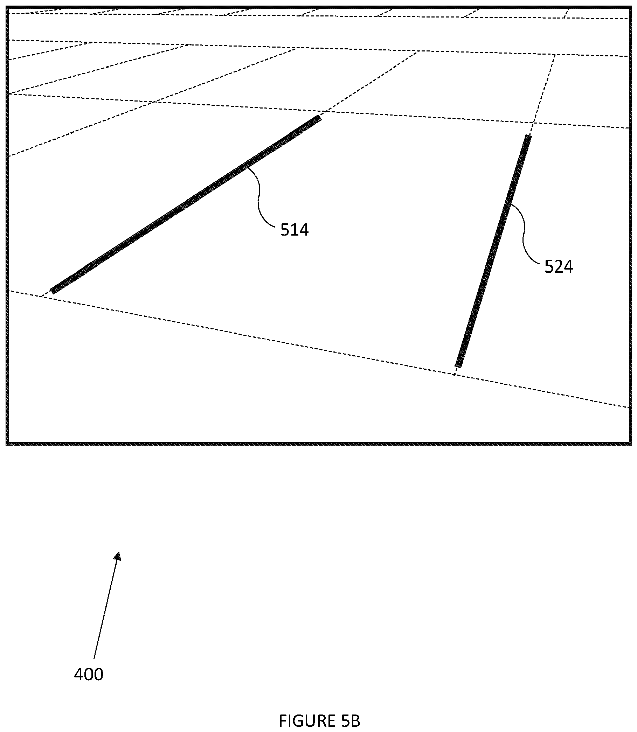

Figure 5B shows a driver view of the corresponding image elements 514 and 524 projected by the head-up display after user calibration to align the calibration features (i.e. image elements 514 and 524) with the real-world, in accordance with this disclosure.

The end-user may change the projected imagery using any number of known techniques. In a simple example, the user may be able to translate or rotate the image element within the field of view. In more advanced examples, the user may be able to skew the image or change the amount of image keystone. In further examples, the user may be able to apply known image effects such as barreling or pincushioning to try and improve the faithfulness of each image element to the real-world object. It may alternatively be said that the user is able to apply these effects to the image as a countermeasure for distortion and the like, cause by optics of the system. The user may be able to change the imagery in any number of different ways until they are satisfied with the result. For the avoidance of doubt, the aim of the method is for the end-user to use the controls available to align each image element with its corresponding real-world feature as best they can. The head-up display imagery is repeatedly changed until the user is happy. In some embodiments, each change requires calculation of a new hologram from a new input image. In summary, the driver adjusts calibration parameters - e.g. in a predefined sequence of changes which the driver is taken through.

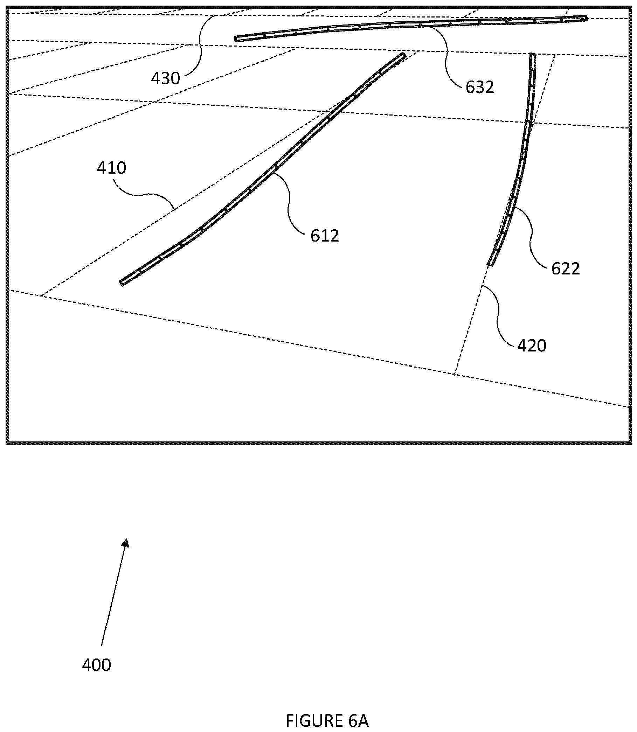

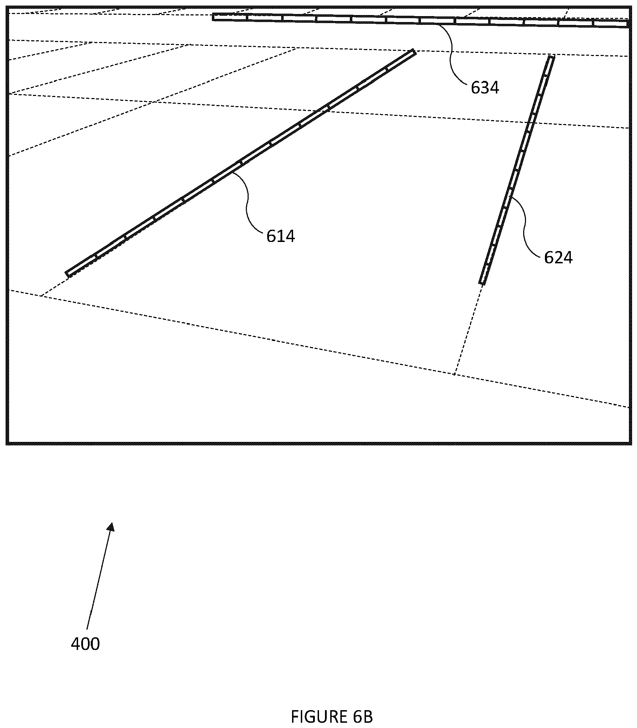

Figures 6A and 6B illustrates an advancement of the concept. Figure 6A shows the uncalibrated image projected by the head-up display and Figure 6B shows the calibrated imagery.

Figure 6A shows a driver view of three example image features 612, 622 and 632 (referred to herein as image elements) projected by the head-up display before the calibration method in accordance with this disclosure. Image elements 612, 622 and 632 should each appear as straight-lines but image distortions are observed. These distortions make the lines appear to be bent when they should be straight. Image elements 612, 622 and 632 should be straight because the input image, which the head-up display was instructed to project, comprised three straight lines corresponding to features 410, 420 and 430, respectively, of the real-world scene 400. Again, in some embodiments, the input image is determined from information extracted from the real-world scene 400 and the information may be obtained by a sensor of the vehicle sensor suite. The information may comprise a representation, such as image, of the scene 400. The input image for the head-up display may be derived from the representation of the scene by image processing. In the example of Figure 6A, the input image comprises features 410, 420 and 430 only but the observed image elements 612, 622 and 632, respectively, are distorted by the optical system including the windscreen.

Figure 6B shows a driver view of the corresponding image elements 614, 624 and 634 projected by the head-up display after user calibration to align the calibration features (i.e. image elements 614, 624 and 634) with the real-world, in accordance with this disclosure.

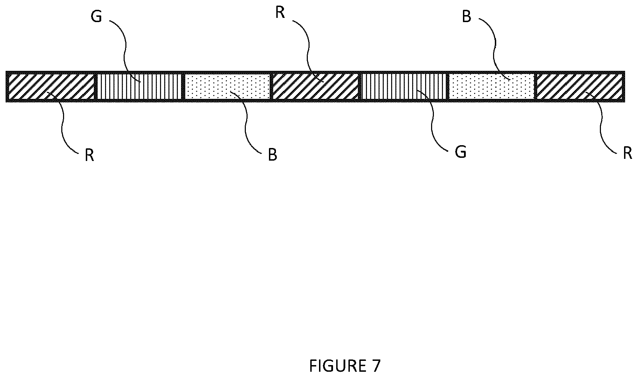

In Figures 6A and 6B, each image element projected by the head-up display comprises a series of single-colour sections, as shown in Figure 7. More specifically, Figure 7 is an example image element comprises an alternating series of red (R), green (G) and blue (B) sections. For example, each image element may be evenly or unevenly divided into e.g. 12 sections such that there are 4 red, 4 green and 4 blue sections arranged in a regular, alternating pattern such as RGBRGBRGBRGB. In the embodiment of Figures 6A and 6B, each image element is formed using single colour sections as shown in Figure 7. In some embodiments, the head-up display comprises a plurality of single-colour channels. Each single colour channel may comprise a corresponding single-colour light source and display device. The person skilled in the art of display technology will be familiar with displays having three single colour components such as red, green and blue. In some embodiments, the head-up display comprises a plurality of single-colour holographic projection channels-see, for example, European patent 3268816.

In embodiments comprises a plurality of single-colour display channels, the coloured image elements shown in Figure 7 provide even better end-user calibration of the head-up display.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

## Claims

1. A computer implemented method for an end-user to perform *in-situ* calibration of the imagery of a head-up display in a vehicle, the method comprising performing, by a processor of the head-up display system, the following steps in response to receiving instruction to enter a head-up display calibration mode:
obtaining information on the real-world scene within a field of view of the head-up display from a vehicle sensor system of the vehicle;
using the information obtained from the vehicle sensor system to determine at least one feature in the field of view,
**characterized by**:
assessing whether each determined feature satisfies a suitability criterion for the head-up display calibration mode, and identifying one or more features that satisfy the suitability criterion;
projecting an image using the head-up display, wherein the image comprises an image element corresponding to each identified feature;
receiving at least one first user-input and changing the image in response to each first user-input, the user input being provided to align the or each respective image element with the corresponding identified feature.

2. A method as claimed in claim 1 wherein changing the image comprises at least one selected from the group comprising: a translating, rotating, skewing or keystoning the image.

3. A method as claimed in any preceding claim wherein the at least one feature comprises a plurality of features each satisfying a suitability criterion; optionally wherein a first feature of the plurality of features satisfies a first suitability criterion and a second feature of the plurality of features satisfies a second suitability criterion different to the first suitability criterion.

4. A method as claimed in any preceding claim wherein the suitability criterion relates to a physical property or parameter of the at least one feature such as shape or length.

5. A method as claimed in any preceding claim wherein satisfying the suitability criterion comprises having a straight line or edge with a minimum length; or having at least two straight sides, optionally, a triangular shape or polygonal shape; or having a circular or elliptical shape .

6. A method as claimed in any preceding claim further comprising identifying at least one feature outside of the field of view that satisfies a suitability criterion and providing an output for the end-user, optionally, wherein the output comprises an instruction to the end-user to reposition the vehicle.

7. A method as claimed in any preceding claim further comprising receiving a second user-input and, in response to the second user-input, determining a calibration function, wherein the calibration function corresponds to the total change to the image made in response to the at least one first user-input; optionally comprising applying the calibration function of claim 10 to each source image before projection.

8. A method as claimed in any preceding claim wherein the step of projecting an image using the head-up display comprises:
determining an input image from the obtained information on the real-world scene;
determining a hologram of the input image; and
illuminating the hologram to form the image.

9. A method as claimed in any preceding claim wherein the information obtained on the real-world scene is a first image of the real-world scene.

10. A head-up display having a calibration mode for an end-user to perform *in-situ* calibration of the imagery of the head-up display in a vehicle, wherein the head-up display comprises means for carrying out the following steps, in response to receiving instruction to enter a head-up display calibration mode:
obtain information on the real-world scene within a field of view from a vehicle sensor system of the vehicle;
using the information obtained from the vehicle sensor system, determine at least one feature in the field of view,
**characterized in that** the head-up display comprises means configured to:
assess whether each determined feature satisfies a suitability criterion, and identify one or more features that satisfy the suitability criterion ;
project an image, wherein the image comprises an image element corresponding to each identified feature;
receive at least one first user-input and change the image in response to each first user-input, the user input being provided to align the or each respective image element with the corresponding identified feature.

11. A head-up display as claimed in claim 10 wherein changing the image comprises at least one selected from the group comprising: a translation, rotation, skew or keystone of the image.

12. A head-up display as claimed in claim 10 or 11 wherein the head-up display is arranged to receive a second user-input and, in response to the second user-input, determine a calibration function, wherein the calibration function represents the total change to the image made in response to the at least one first user-input, optionally wherein the head-up display is arranged, during normal display operation, to apply the calibration function to each source image before projection.

13. A head-up display as claimed in any of claims 10 to 12, wherein the head-up display is further arranged to:
determine an input image from the obtained information on the real-world scene;
determine a hologram of the input image; and
illuminate the hologram in order to project the image.

14. A head-up display as claimed in any of claims 10 to 13 wherein the suitability criterion relates to a physical property or parameter of the at least one feature such as shape or length.

15. A head-up display as claimed in any of claims 10 to 14 wherein satisfying the suitability criterion comprises having at least one selected from the group comprising: a straight line or edge with a minimum length; at least two straight sides each with a minimum length; a polygonal shape with a minimum area; or a circular or elliptical shape with an minimum dimension or area.

## Patentansprüche

1. Computerimplementiertes Verfahren für einen Endbenutzer, um eine *Vor-Ort-*Kalibrierung der Bildsprache einer Head-up-Anzeige in einem Fahrzeug durchzuführen, wobei das Verfahren das Durchführen durch einen Prozessor des Head-up-Anzeigesystems der folgenden Schritte als Reaktion auf den Empfang einer Anweisung, um in einen Kalibrierungsmodus der Head-up-Anzeige zu wechseln, umfasst:
Erhalten von Informationen über die Szene der realen Welt innerhalb eines Sichtfelds der Head-up-Anzeige von einem Fahrzeugsensorsystem des Fahrzeugs;
Verwenden der aus des Fahrzeugsensorsystem erhaltenen Informationen, um mindestens ein Merkmal im Sichtfeld zu bestimmen,
**gekennzeichnet durch**:
Bewerten, ob jedes bestimmte Merkmal ein Eignungskriterium für den Kalibrierungsmodus der Head-up-Anzeige erfüllt, und Identifizieren eines oder mehrerer Merkmale, die das Eignungskriterium erfüllen;
Projizieren eines Bildes unter Verwendung der Head-up-Anzeige, wobei das Bild ein Bildelement umfasst, das jedem identifizierten Merkmal entspricht;
Empfangen von mindestens einer ersten Benutzereingabe und Ändern des Bildes als Reaktion auf jede erste Benutzereingabe, wobei die Benutzereingabe bereitgestellt wird, um das oder jedes jeweilige Bildelement mit dem entsprechenden identifizierten Merkmal auszurichten.

2. Verfahren nach Anspruch 1, wobei das Ändern des Bildes mindestens eines umfasst, ausgewählt aus der Gruppe, umfassend: eine Verschiebung, eine Drehung, eine Schrägstellung oder eine Trapezkorrektur des Bildes.

3. Verfahren nach einem vorstehenden Anspruch, wobei das mindestens eine Merkmal eine Vielzahl von Merkmalen umfasst, die jeweils ein Eignungskriterium erfüllen; wobei optional ein erstes Merkmal der Vielzahl von Merkmalen ein erstes Eignungskriterium erfüllt und ein zweites Merkmal der Vielzahl von Merkmalen ein zweites Eignungskriterium erfüllt, das sich von dem ersten Eignungskriterium unterscheidet.

4. Verfahren nach einem vorstehenden Anspruch, wobei sich das Eignungskriterium auf eine physikalische Eigenschaft oder einen Parameter des mindestens einen Merkmals, wie etwa Form oder Länge, bezieht.

5. Verfahren nach einem vorstehenden Anspruch, wobei das Erfüllen des Eignungskriteriums das Aufweisen einer geraden Linie oder Kante mit einer Mindestlänge; oder das Aufweisen von mindestens zwei geraden Seiten, optional einer dreieckigen Form oder polygonalen Form; oder das Aufweisen einer kreisförmigen oder elliptischen Form umfasst.

6. Verfahren nach einem vorstehenden Anspruch, das weiter das Identifizieren von mindestens einem Merkmal außerhalb des Sichtfelds, das ein Eignungskriterium erfüllt, und das Bereitstellen einer Ausgabe für den Endbenutzer umfasst, wobei die Ausgabe optional eine Anweisung an den Endbenutzer umfasst, um das Fahrzeug neu zu positionieren.

7. Verfahren nach einem vorstehenden Anspruch, das weiter das Empfangen einer zweiten Benutzereingabe und als Reaktion auf die zweite Benutzereingabe das Bestimmen einer Kalibrierungsfunktion umfasst, wobei die Kalibrierungsfunktion der Gesamtänderung am Bild entspricht, die als Reaktion auf die mindestens eine erste Benutzereingabe vorgenommen wurde; optional das Anwenden der Kalibrierungsfunktion nach Anspruch 10 auf jedes Quellbild vor einer Projektion umfasst.

8. Verfahren nach einem vorstehenden Anspruch, wobei der Schritt des Projizierens eines Bildes unter Verwendung der Head-up-Anzeige umfasst:
Bestimmen eines Eingabebildes aus den erhaltenen Informationen über die Szene der realen Welt;
Bestimmen eines Hologramms des Eingabebildes; und
Beleuchten des Hologramms, um das Bild zu bilden.

9. Verfahren nach einem vorstehenden Anspruch, wobei die über die Szene der realen Welt erhaltenen Informationen ein erstes Bild der Szene der realen Welt sind.

10. Head-up-Anzeige, die einen Kalibrierungsmodus für einen Endbenutzer aufweist, um eine Vor-Ort-Kalibrierung der Bildsprache der Head-up-Anzeige in einem Fahrzeug durchzuführen, wobei die Head-up-Anzeige Mittel zum Ausführen der folgenden Schritte als Reaktion auf den Empfang einer Anweisung, um in einen Kalibrierungsmodus der Head-up-Anzeige zu wechseln, umfasst:
Informationen über die Szene der realen Welt innerhalb eines Sichtfelds von einem Fahrzeugsensorsystem des Fahrzeugs zu erhalten;
unter Verwendung der von dem Fahrzeugsensorsystem erhaltenen Informationen, mindestens ein Merkmal im Sichtfeld zu bestimmen,
**dadurch gekennzeichnet, dass** die Head-up-Anzeige Mittel umfasst, die konfiguriert sind, um:
zu bewerten, objedes bestimmte Merkmal ein Eignungskriterium erfüllt, und eines oder mehrerer Merkmale, die das Eignungskriterium erfüllen, zu identifizieren;
ein Bild zu projizieren, wobei das Bild ein Bildelement umfasst, das jedem identifizierten Merkmal entspricht;
mindestens eine erste Benutzereingabe zu empfangen und das Bild als Reaktion auf jede erste Benutzereingabe zu ändern, wobei die Benutzereingabe bereitgestellt wird, um das oder jedes jeweilige Bildelement mit dem entsprechenden identifizierten Merkmal auszurichten.

11. Head-up-Anzeige nach Anspruch 10, wobei das Ändern des Bildes mindestens eines umfasst, ausgewählt aus der Gruppe, umfassend: eine Verschiebung, eine Drehung, eine Schrägstellung oder eine Trapezkorrektur des Bildes.

12. Head-up-Anzeige nach Anspruch 10 oder 11, wobei die Head-up-Anzeige angeordnet ist, um eine zweite Benutzereingabe zu empfangen und als Reaktion auf die zweite Benutzereingabe eine Kalibrierungsfunktion zu bestimmen, wobei die Kalibrierungsfunktion die Gesamtänderung des Bildes darstellt, die als Reaktion auf die mindestens eine erste Benutzereingabe vorgenommen wurde, wobei die Head-up-Anzeige optional angeordnet ist, um während des normalen Anzeigebetriebs die Kalibrierungsfunktion vor der Projektion auf jedes Quellbild anzuwenden.

13. Head-up-Anzeige nach einem der Ansprüche 10 bis 12, wobei die Head-up-Anzeige weiter angeordnet ist, um:
ein Eingabebild aus den erhaltenen Informationen über die Szene der realen Welt zu bestimmen;
ein Hologramm des Eingabebildes zu bestimmen; und
das Hologramms zu beleuchten, um das Bild zu projizieren.

14. Head-up-Anzeige nach einem der Ansprüche 10 bis 13, wobei sich das Eignungskriterium auf eine physikalische Eigenschaft oder einen Parameter des mindestens einen Merkmals, wie etwa Form oder Länge, bezieht.

15. Head-up-Anzeige nach einem der Ansprüche 10 bis 14, wobei das Erfüllen des Eignungskriteriums das Aufweisen von mindestens einem umfasst, ausgewählt aus der Gruppe, umfassend: eine gerade Linie oder Kante mit einer Mindestlänge; mindestens zwei gerade Seiten mit jeweils einer Mindestlänge; eine polygonale Form mit einer Mindestfläche; oder eine kreisförmige oder elliptische Form mit einer Mindestabmessung oder -fläche.

## Revendications

1. Procédé mis en oeuvre par ordinateur permettant à un utilisateur final d'effectuer un étalonnage *in situ* de l'imagerie d'un affichage tête haute dans un véhicule, le procédé comprenant la réalisation, par un processeur du système d'affichage tête haute, des étapes suivantes en réponse à la réception d'une instruction pour entrer dans un mode d'étalonnage d'affichage tête haute :
l'obtention d'informations sur la scène de monde réel dans un champ de vision de l'affichage tête haute à partir d'un système de capteur de véhicule du véhicule ;
l'utilisation des informations obtenues à partir du système de capteur de véhicule pour déterminer au moins une caractéristique dans le champ de vision,
**caractérisé par** :
le fait d'évaluer si chaque caractéristique déterminée satisfait un critère d'aptitude pour le mode d'étalonnage d'affichage tête haute, et l'identification d'une ou plusieurs caractéristiques qui satisfont le critère d'aptitude ;
la projection d'une image à l'aide de l'affichage tête haute, dans lequel l'image comprend un élément d'image correspondant à chaque caractéristique identifiée ;
la réception d'au moins une première entrée utilisateur et la modification de l'image en réponse à chaque première entrée utilisateur, l'entrée utilisateur étant fournie pour aligner le ou chaque élément d'image respectif avec la caractéristique identifiée correspondante.

2. Procédé selon la revendication 1 dans lequel la modification de l'image comprend au moins une sélectionnée dans le groupe comprenant : une translation, une rotation, une inclinaison ou une distorsion trapézoïdale de l'image.

3. Procédé selon une quelconque revendication précédente dans lequel la au moins une caractéristique comprend une pluralité de caractéristiques satisfaisant chacune un critère d'aptitude ; facultativement dans lequel une première caractéristique de la pluralité de caractéristiques satisfait un premier critère d'aptitude et une seconde caractéristique de la pluralité de caractéristiques satisfait un second critère d'aptitude différent du premier critère d'aptitude.

4. Procédé selon une quelconque revendication précédente dans lequel le critère d'aptitude concerne un paramètre ou propriété physique de la au moins une caractéristique tel que la forme ou la longueur.

5. Procédé selon une quelconque revendication précédente dans lequel la satisfaction du critère d'aptitude comprend le fait de présenter une ligne droite ou un bord droit d'une longueur minimale ; ou de présenter au moins deux côtés droits, facultativement, une forme triangulaire ou forme polygonale ; ou de présenter une forme circulaire ou elliptique.

6. Procédé selon une quelconque revendication précédente comprenant en outre l'identification d'au moins une caractéristique en dehors du champ de vision qui satisfait un critère d'aptitude et la fourniture d'une sortie pour l'utilisateur final, facultativement dans lequel la sortie comprend une instruction demandant à l'utilisateur final de repositionner le véhicule.

7. Procédé selon une quelconque revendication précédente comprenant en outre la réception d'une second entrée utilisateur et, en réponse à la second entrée utilisateur, la détermination d'une fonction d'étalonnage, dans lequel la fonction d'étalonnage correspond au changement total apporté à l'image en réponse à la au moins une première entrée utilisateur; comprenant facultativement l'application de la fonction d'étalonnage de la revendication 10 à chaque image source avant projection.

8. Procédé selon une quelconque revendication précédente dans lequel l'étape de projection d'une image à l'aide de l'affichage tête haute comprend :
la détermination d'une image d'entrée à partir des informations obtenues sur la scène de monde réel ;
la détermination d'un hologramme de l'image d'entrée ; et
l'éclairage de l'hologramme pour former l'image.

9. Procédé selon une quelconque revendication précédente dans lequel les informations obtenues sur la scène de monde réel sont une première image de la scène de monde réel.

10. Affichage tête haute présentant un mode d'étalonnage permettant à un utilisateur final d'effectuer un étalonnage *in situ* de l'imagerie de l'affichage tête haute dans un véhicule, dans lequel l'affichage tête haute comprend des moyens permettant de réaliser les étapes suivantes, en réponse à la réception d'une instruction pour entrer dans un mode d'étalonnage d'affichage tête haute :
l'obtention d'informations sur la scène de monde réel dans un champ de vision à partir d'un système de capteur de véhicule du véhicule ;
à l'aide des informations obtenues à partir du système de capteur de véhicule, la détermination d'au moins une caractéristique dans le champ de vision,
**caractérisé en ce que** l'affichage tête haute comprend des moyens configurés pour :
évaluer si chaque caractéristique déterminée satisfait un critère d'aptitude, et identifier une ou plusieurs caractéristiques qui satisfont le critère d'aptitude ;
projeter une image, dans lequel l'image comprend un élément d'image correspondant à chaque caractéristique identifiée ;
recevoir au moins une première entrée utilisateur et modifier l'image en réponse à chaque première entrée utilisateur, l'entrée utilisateur étant fournie pour aligner le ou chaque élément d'image respectif avec la caractéristique identifiée correspondante.

11. Affichage tête haute selon la revendication 10 dans lequel la modification de l'image comprend au moins une sélectionnée dans le groupe comprenant : une translation, une rotation, une inclinaison ou une distorsion trapézoïdale de l'image.

12. Affichage tête haute selon la revendication 10 ou 11 dans lequel l'affichage tête haute est conçu pour recevoir une seconde entrée utilisateur et, en réponse à la seconde entrée utilisateur, déterminer une fonction d'étalonnage, dans lequel la fonction d'étalonnage représente la modification totale de l'image effectuée en réponse à la au moins une première entrée utilisateur, facultativement dans lequel l'affichage tête haute est conçu, pendant un fonctionnement normal de l'affichage, pour appliquer la fonction d'étalonnage à chaque image source avant projection.

13. Affichage tête haute selon l'une quelconque des revendications 10 à 12, dans lequel l'affichage tête haute est en outre conçu pour :
déterminer une image d'entrée à partir des informations obtenues sur la scène de monde réel ;
déterminer un hologramme de l'image d'entrée ; et
éclairer l'hologramme afin de projeter l'image.

14. Affichage tête haute selon l'une quelconque des revendications 10 à 13 dans lequel le critère d'aptitude concerne un paramètre ou propriété physique de la au moins une caractéristique tel que la forme ou la longueur.

15. Affichage tête haute selon l'une quelconque des revendications 10 à 14 dans lequel la satisfaction du critère d'aptitude comprend le fait de présenter au moins un sélectionné dans le groupe comprenant : une ligne droite ou un bord droit d'une longueur minimale ; au moins deux côtés droits chacun d'une longueur minimale ; une forme polygonale avec une superficie minimale ; ou une forme circulaire ou elliptique avec une dimension ou superficie minimale.
